(19) **Europäisches Patentamt / European Patent Office / Office européen des brevets**

(11) **EP 2 447 220 B1**

(12) **EUROPEAN PATENT SPECIFICATION**

(45) Date of publication and mention
of the grant of the patent:
**30.09.2015 Bulletin 2015/40**

(51) Int Cl.:
*C02F 1/70* (2006.01)     *C02F 1/52* (2006.01)
*C02F 101/20* (2006.01)     *C02F 101/22* (2006.01)
*C02F 103/06* (2006.01)     *C02F 1/00* (2006.01)

(21) Application number: **10189739.5**

(22) Date of filing: **02.11.2010**

(54) **Continuously removing contaminants from aqueous fluids**

**Kontinuierliches Entfernen von Verunreinigungen aus Gewässern**

**Élimination en continu de contaminants des fluides aqueux**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.05.2012 Bulletin 2012/18**

(73) Proprietor: **Montanuniversität Leoben
8700 Leoben (AT)**

(72) Inventors:
  • **Müller, Peter
    8700, Leoben (AT)**
  • **Mischitz, Robert
    5500, Bischofshofen (AT)**
  • **Weiß, Christian
    8793, Trofaiach (AT)**

(74) Representative: **Dilg, Haeusler, Schindelmann
Patentanwaltsgesellschaft mbH
Leonrodstrasse 58
80636 München (DE)**

(56) References cited:
WO-A1-01/10786     WO-A1-93/01135
US-A- 4 027 864     US-A- 4 382 865
US-A- 5 635 073     US-A1- 2003 196 961
US-A1- 2010 126 944

  • CHEN ET AL: "Reduction of chromate from
    electroplating wastewater from pH 1 to 2 using
    fluidized zero valent iron process", JOURNAL OF
    HAZARDOUS MATERIALS, ELSEVIER,
    AMSTERDAM, NL, vol. 142, no. 1-2, 19 March 2007
    (2007-03-19), pages 362-367, XP005933679, ISSN:
    0304-3894, DOI: DOI:10.1016/J.JHAZMAT.
    2006.08.029
  • CHEN ET AL: "Chromate reduction by waste iron
    from electroplating wastewater using plug flow
    reactor", JOURNAL OF HAZARDOUS
    MATERIALS, ELSEVIER, AMSTERDAM, NL, vol.
    152, no. 3, 13 March 2008 (2008-03-13), pages
    1092-1097, XP022527377, ISSN: 0304-3894, DOI:
    DOI:10.1016/J.JHAZMAT.2007.07.086

Remarks:
The file contains technical information submitted after
the application was filed and not included in this
specification

EP 2 447 220 B1

**Description**

FIELD OF THE INVENTION

The present invention relates to a method for removing a contaminant in a contaminated fluid.

BACKGROUND OF THE INVENTION

Contaminated fluids, such as contaminated sewage water or contaminated ground water, may be contaminated for example by heavy metal or chrome compounds. In order to reduce the toxicity, the contaminated fluid is reacted with reacting agents in order to generate an inert reaction product with less toxicity.

In particular, the toxicity of a plurality of organic and inorganic contaminants may be reduced by redox reactions. Hence, by means of a reduction of a configuration of electrons of the contaminants, the contaminants may be transferred to inert reaction products with less toxicity. Moreover, by a redox reaction, the compounds may be transferred to a solid compound, wherein the solid compound may be separated from the decontaminated fluid in a filtration, a floatation or a sedimentation step, for example.

US 2005/0133458 A1 discloses an apparatus for reducing a concentration of ions of perchlorate in water. The contaminated water is fed into a photochemical reactor. The contaminated water that flows in an upward direction against the force of gravity inside the photochemical reactor keeps iron particles in suspension and forms a fluidized bed of the iron particles inside the photochemical reactor. The fluidized bed is further exerted to ultra violet radiation.

EP 0 499 928 A1 discloses a process for removal of copper ions from aqueous effluent. A reactor forms a column-like shape. In the column of the reactor, a fluidized bed is generated by flowing copper contaminated fluid through iron particles in order to generate an inert copper compound by reaction of copper ions with the iron particles. The condition of the fluidized bed in the column may be controlled by a critical fluidization velocity.

US 2005/0133458 A1 and EP 0 499 928 A1 describe the use of iron particles which have a small size in order to achieve a large particle surface for accelerating the reaction with the contaminant. Hence, the flow velocity of the contaminated fluid which forms the fluidized bed is low, so that the small iron particles are prevented from being carried away by the high flow velocity of the contaminated fluid. Therefore, it is suggested that the particle size should not exceed 800 - 900 micrometer.

US 5,380,441 A discloses a device for removing chromium from a contaminated solution by using mechanically agitated iron particles. Metallic iron particles are added to the contaminated solution, so that hexavalent chromium in the contaminated solution is reduced to trivalent chromium and iron is oxidized to ferric iron. It is described, that the size of the iron particles must be sufficiently large to provide enough abrasion to clean the surface of the particles when the particles are agitated. In particular the steel particles comprise a diameter of more than 6,35 mm. The contaminated solution is put in a plastic beaker and a magnetic steering bar is used to steer the solution with the iron particles. After reaction of the iron particles with the contaminant, the solution is centrifuged in order to remove the reactive product.

US 4,108,770 A discloses a chromium reduction process in order to reduct hexavalent chromium compounds by means of iron particles. The iron particles are filled inside a reactor and rest on the ground of the reactor. The iron particles have a size of more than 6,35 mm in order to keep the particles rested on the bottom of the reactor and in order to prevent a dense and impenetrable package of the iron particles. The contaminated fluid percolates through the package of iron particles along the direction of gravity.

Chen et al., "Chromate reduction by waste iron from electroplating wastewater using plug flow reactor", Journal of Hazardous Materials, Elsevier, Amsterdam, Vol. 152, No. 3, pages 1092-1097 discloses a method of reducing chromate using waste iron from electroplating wastewater using a plug flow reactor. In this context, waste iron particles are used which pass through a first sieve and remain on a second sieve, representing a size range of 0.85-2 mm.

OBJECT AND SUMMARY OF THE INVENTION

There may be a need for providing a system for removing a contaminant in a contaminated fluid, wherein the system should efficiently reduce the contaminant without needing complex and expensive system components.

This need may be met by a method for removing a contaminant in a contaminated fluid according to the independent claim.

According to a first example, a system for at least partially removing a contaminant in a contaminated fluid is presented. The system comprises a reaction vessel and a fluid supply unit. The reaction vessel comprises a fluid inlet and a fluid outlet. The fluid inlet and the fluid outlet are arranged in such a way that the contaminated fluid is flowable (conductable) from the fluid inlet to the fluid outlet in a fluid flow direction which has at least a component orientated antiparallel to the force of gravity. The fluid supply unit is connected to the fluid inlet for supplying the contaminated fluid through the fluid inlet inside the reaction vessel. Reactive particles which are reactive with the contaminant are filled into the reaction vessel. The fluid supply unit controls a flow velocity of the contaminated fluid between the fluid inlet and the fluid outlet, so that the flow of contaminated fluid through the reactive particles generates a fluidized bed of the reactive particles, thereby removing at least partially the contaminant in the contaminated fluid by a reaction of the contaminant and the reactive particles. In particular, at least 80 % of the reactive particles have a size of more than 2 mm (millimetre).

According to the present invention, a method for at least partially removing a contaminated fluid is presented having the features according to the independent claim 1. According to the method, the contaminated fluid is fed (conducted) through a fluid inlet of a reaction vessel inside the reaction vessel. The contaminated fluid flows from the fluid inlet to a fluid outlet of the reaction vessel in a fluid flow direction which has at least a component orientated antiparallel to the force of gravity. Reactive particles which are reactive with the contaminant are filled inside the reaction vessel, wherein at least 80 % of the reactive particles have a size of more than 2 mm. A flow velocity of the contaminated fluid between the fluid inlet and the fluid outlet is controlled in such a way that the flow of contaminated fluid through the reactive particles generates a fluidized bed of the reactive particles such that for at least partially removing the contaminant in the contaminated fluid by a reaction of the contaminant and the reactive particles.

By the term "reaction vessel" a fluidized bed reactor, in particular a slugging bed reactor, may be described. In the fluidized bed reactor, the reactive particles are converted from a static solid-like state to a dynamic fluid-like (fluidized) state. This is generated by feeding and conducting the contaminated fluid through the reactive particles inside the fluidized bed reactor in a fluid flow direction which has at least a component orientated antiparallel to the force of gravity. In particular, the fluid flow of the contaminated fluid is directed along a (substantially) vertical direction against the force of gravity.

If the contaminated fluid is introduced through the bottom of a solid-like bed of the reactive particles, the contaminated fluid is conducted upwards through the reactive particles via the empty spaces between the reactive particles. When reaching a predetermined flow velocity, the hydrodynamic drag forces begin to counter act in an antiparallel orientation to the gravitational forces, so that the bed of reactive particles expands in volume and the particles move away from each other. Finally, when a certain flow velocity of the contaminated fluid is reached, the drag forces are equal with the downward acting gravitational force, so that the reactive particles become suspended within the contaminated fluid. Hence, in the state when the drag forces are equal with the downward acting gravitational force of the reactive particles, the fluidized bed is formed. In other words, the reactive particles forms the fluidized bed when the drag forces acting on the reactive particles by the contaminant fluid are equal with the downward acting gravitational force acting on the reactive particles. The reactive particles in the fluidized bed comprise substantially fluidic behaviours.

By the flow velocity of the contaminated fluid, the (vertical) extension, i.e. the (vertical) height, of the fluidized bed inside the reaction vessel is adjustable. The flow velocity with which the reactive particles generate the fluidized bed is dependent from the size and the weight of the reactive particles. Smaller particles than the reactive particles leave the fluidized bed and stream together with the contaminated fluid out of the reactor vessel. In particular, the smaller particles are transported by the flow of the contaminated fluid up to the top of the reaction vessel and through the fluid outlet. The inert reaction product or abrasion particles may form the smaller particles.

The size of the reactive particles is larger than approximately 2 mm. In particular, the size of the reactive particles is defined between approximately 2 mm (millimetre) and approximately 6 mm, in particular between approximately 2 mm to approximately 4 mm and in particular between approximately 3 mm and 4 mm.

Moreover, according to the present invention, at least around 80 % to 100 % of the reactive particles comprise the above defined particle sizes. Preferably, around 80 % or around 90 % of the reactive particles comprise a particle size of approximately more than 2 mm.

The term "contaminated fluid" describes a fluid, in particular a liquid or an aqueous medium, into which a certain amount (concentration) of (toxic) contaminant is within the solution. When the contaminated fluid passes the reaction vessel or the reaction vessels, the contaminated fluid may be called "decontaminated fluid", because the concentration of contaminants has been removed or at least considerably reduced by the reactive particles in the respective vessels.

The reactive particles (i.e. reactive granules) are selected in order to react with predefined contaminants in the contaminant fluid. A reaction of the reactive particles and the contaminants results in a reaction product. In particular, the reaction product is less toxic in comparison to the contaminant concentration in the contaminated fluid. The reaction product may be in particular an inert reaction product, which is lesser reactive than the contaminant. The size of the reactive particles is defined by its diameters. In particular, the size is defined by the Sauter mean diameter, which denotes an average particle size.

In the fluidized bed the reactive particle moves turbulent and randomly with respect to each other. By the turbulent movement of the reactive particles in the fluidized bed a homogeneous and improved intermixing of the contaminants in the contaminated fluid and the reactive particles is achieved. Hence, a faster reaction of the contaminant in the contaminated fluid with the reactive particles is achieved.

Moreover, by the turbulent movement of the reactive particles with respect to each other, mechanical abrasion of the surface of the reactive particles occurs, so that the surfaces of the reactive particles are cleaned from sticking (inert) reaction product parts, such that the surface of the reactive particles is exposed again. Hence, the abrasion particles are composed of the inert reaction product and comprise a smaller size than the reactive particles. The abrasion particles may consist from the same material as the reactive particles and have only a smaller size than the reactive particles. Hence, because of the smaller size of the abrasion particles of the inert reaction product or of the material of the reactive particles, the inert reaction product and the abrasion particles flow together with the contaminated fluid along the vertical direction to the fluid outlet and is thus drained off the reaction vessel.

Hence, by the present invention, a continuously operating contaminant reduction system is achieved in which the reactive particles comprise a self-cleaning function and wherein the inert reaction product is dragged out from the reaction vessel automatically without the need of cleanout steps or maintenance steps.

Against the conventional approaches, whereby particles for use in a fluidized bed should have a size of less than 0,9 mm for forming larger reaction surfaces of the reactive particles in order to achieve an effective contaminant reduction reactor, the reactive particles according to the present invention have a size of more than 2 mm. This leads to the surprising effect that although the reaction surface is smaller and although the flow velocity of the contaminated fluid through the reactive particles is higher for generating a fluidized bed, a more effective reaction of the contaminant with the reactive particles due to the more turbulent and faster movement of the reactive particles inside the contaminated fluid is achieved.

The reactive particles may comprise zero-valent iron or ferrous composition material. Moreover, the reactive particles may be alloyed with iron.

The contaminant in the contaminated fluid may comprise hexavalent chromium. Moreover, the contaminant may comprise at least one of the elements from the group consisting of heavy metals, metalloids and compounds of heavy metals or metalloids. Examples for this are compounds of nickel, lead, iron, manganese, arsenic, cadmium, molybdenum, copper, zinc, mercury, selenium, cobalt, and uranium.

Moreover, the contaminant may comprise toxic anions, such as bromide, chloride, nitrate, phosphate and cyanide.

Moreover, the contaminant may comprise toxic organic substances.

Moreover, the contaminant may comprise halogenated hydrocarbons, such as carbon tetrachloride, perchlorethene and chloroform.

Moreover, the contaminant may comprise at least one of the elements from the group comprising of nitro compounds, nitrile compounds and azo compounds.

According to a further exemplary embodiment of the present invention, the supply unit is adapted for controlling the flow velocity of the contaminated fluid between the fluid inlet and the fluid outlet in such a way that the vertical height of the fluidized bed inside the reaction vessel along the vertical direction is adjustable.

In particular, the reactive particles may fill 50 % to 95 %, preferably 70 % to 85 %, of the volume of the reaction vessel when the reactive particles are in a fluidized state, in which state the reactive particles forms the fluidized bed.

Hence, the adjusted vertical height may be defined (vertically) below the fluid output. Hence, the reactive particles, which move turbulent within the fluidized bed, do not reach the fluid outlet, so that an undesired discharge of the reactive particles caused by a draining off the contaminated fluid through the fluid outlet is prevented. Hence, by the fluid supply unit a predefined extension, i.e. vertical height, of the fluidized bed is adjustable, so that the reactive particles may rest inside the fluidized bed and thus inside the reaction vessel. Further filtration means may be obsolete. Hence, the maintenance cycles in which the reactive particles have to be refilled in the reaction vessel may be reduced. By adjusting exactly the height of the fluidized bed, the need for a separation unit may be obsolete, so that a cleaning of the separation units may be obsolete as well.

According to a further exemplary embodiment, the fluid supply unit is adapted for controlling the flow velocity of the contaminated fluid between the fluid inlet and the fluid outlet in such a way, that the contaminated fluid flows in a substantially slug-flow regime through the fluidized bed. By a slug flow, a velocity profile in a pipe-shaped vessel is described, wherein the velocity of the contaminated fluid is kept substantially constant across a cross-section of the vessel perpendicular to the centre (i.e. vertical) axis of the vessel. By generating a slug flow of the contaminated fluid, the boundary layer of the flow of the contaminated fluid is kept small, so that a homogeneous velocity profile is achievable. Hence, a stable and effective fluidized bed may be generated by the contaminated fluid.

In other words, by generating a slug-flow regime, the reaction vessel is a slugging bed reactor. In a slugging bed reactor, the fluidized bed is a slugging bed, which is a bed in which liquid bubbles occupy entire cross sections of the vessel and divide the bed into layers. In particular, accumulated reactive particle plugs are separated by clear liquid zones moving upwards through the slugging bed reactor.

According to the fluidized bed phase diagram (so-called Reh-Diagram; VDI Heat Atlas; 9th. edition, page Lcb4) a bubbling fluidized bed (including the slug-flow regime) should comprise a volume of fluid (void volume) in the fluidized bed of approximately 60 % to 80 %. In other words, in a slug flow the volume of the reactive particles is approximately 20 % to 40 %. The flow velocity of the contaminated fluid through the reactive vessel for generating a slug flow may be calculated by the following quotations:

$$v_s = \sqrt{\frac{4d_{p_{32}}g(\rho_p - \rho_l)}{3\rho_l C_D} \cdot (1-\alpha)^{2,4}}\, , \qquad C_D = \frac{24}{Re} + \frac{4}{\sqrt{Re}} + 0,4$$

The term $(1 - a)^{2,4}$ estimates a necessary swarm correction of the reactive particles, wherein a denotes the volume fraction of the solid phase in the slug flow.

| | |
|---|---|
| $V_s$ | flow velocity of the contaminated fluid [m/s] |
| $d_{p32}$ | Sauter mean diameter of the reactive particles [m], |
| g | acceleration of gravity [m/s$^2$] |
| $\rho_p$ | density of the reactive particles [kg/m$^3$] |
| $\rho_l$ | density of the contaminated fluid [kg/m$^3$] |
| $C_D$ | drag coefficient [-] |
| Re | Reynolds number [-] |

According to a further exemplary embodiment, the reaction vessel further comprises a restraint system (e.g. grid) for keeping the reactive particles in the reaction vessel. If particles disassociate from the fluidized bed, for example due to vibrations or other disturbances of the system, the reactive particles are forced to rest inside the reaction vessel by the restraint system. The restraint system may be installed close to the fluid outlet. Moreover, the restraint system may be installed in a bottom region of the reaction vessel, such that the restraint system forms a support surface for the reactive particles if the system is inactive, such that no reactive particles are discharged caused by gravity.

According to a further exemplary embodiment, the system further comprises a recirculation pipe which is connected to the fluid outlet and to the fluid supply unit such that the contaminated fluid flows from the reaction vessel through the fluid outlet back to the fluid supply unit and through the fluid inlet again into the reaction vessel. Hence, a plurality of cleaning cycles of the contaminated fluid through the reactor may be possible. For example, the contaminated fluid may pass the fluidized bed of reactive particles inside the reaction vessel for several times (cycles) such that more contaminant is removed in comparison to a single cycle through the fluidized bed.

A valve may be installed to the recirculation pipe such that after flowing in a final cycle, the contaminant reduced contaminated fluid (or decontaminated fluid) may be redirected and conducted to its final destination, e.g. to a collecting tank.

According to a further exemplary embodiment, the system further comprises a reservoir for the contaminated fluid. The reservoir is arranged such that the contaminated fluid is fed to the fluid inlet. To the reservoir (industrial) sewage and wastewater may be fed. Moreover, the reservoir may be an open reservoir for collecting e.g. rain water which has to be cleaned.

In a further exemplary embodiment of the present invention, the reservoir is a sump which is located into a ground. Hence, the reservoir is carved inside the ground such that contaminated fluid, from contaminated soil and grounds may be collected by the sump. The system may be connected to the sump, so that the contaminated fluid inside the sump may be cleaned inside the reaction vessel of the system.

The above-described system is usable for a long-term application, because the reactive particles clean themselves (self-cleaning properties) and are kept inside the reaction vessel (by preventing a washing out of the particles), such that the above-described system is suitable for permanent operation for cleaning contaminated soils, for example.

According to a further exemplary embodiment, the system comprises a further reaction vessel with a further fluid inlet and a further fluid outlet. The further fluid inlet and the further fluid outlet are arranged in such a way that the contaminated fluid is flowable (conductable) from the further fluid inlet to the further fluid outlet in a fluid flow direction which has at least a component orientated antiparallel to the force of gravity. Further reactive particles which are reactive with the contaminant are filled inside the further reaction vessel. A further flow velocity of the contaminated fluid between the further fluid inlet and the further fluid outlet is regulated in such a way that the flow of the contaminated fluid through the further reactive particles generate a fluidized bed of the further reactive particles, thereby removing at least partially the contaminant in the contaminated fluid by a reaction of the contaminant and the further reactive particles.

By the present exemplary embodiment, the further reaction vessel(s) may be connected to the reaction vessel(s) in series or in parallel. The further reaction vessel(s) may be identical in construction and may have similar features as the above and below described reaction vessel.

The further reactive particles may be made of the same composition as the above-described reactive particles or may comprise a different composition with respect to the above-described reactive particles. Hence, if the further reactive particles differ to the above-described reactive particles, different contaminants may react to a further (inert) reactive product in comparison to the reaction vessel.

According to a further exemplary embodiment, the further reaction vessel is arranged in such a way that the further reaction vessel receives the contaminated fluid from the reservoir. Hence, the reaction vessel and the further reaction vessel are connected in parallel. In this exemplary embodiment, a larger volume of contaminated fluid may be cleaned because a higher mass flow of contaminated fluid may be fed into the several reaction vessels.

According to a further exemplary embodiment, the further reaction vessel is arranged in such a way that the further reaction vessel receives the contaminated fluid from the fluid outlet of the previous reaction vessel. Hence, by the exemplary arrangement, the reaction vessel and the further reaction vessel are connected in series. Hence, the contaminated fluid may flow subsequent through the reaction vessels and the further reaction vessel such that more cycles of reaction with reactive particles in the respective fluidized bed of the respective reaction vessel are achieved. Hence, a more effective reduction of the contaminant in the contaminated fluid is achieved by the serial connected reaction vessels. Moreover, in the above-described exemplary arrangement of the reaction vessel and the further reaction vessel, different reactive particles may be filled in the respective reaction vessels such that different kinds of contaminants may be removed from the contaminated fluid.

According to the present invention, a plurality of reaction vessels and further reaction vessels may be connected in series and/or in parallel in a common system such that an effective system for removing the contaminant in the contaminated fluid is generated.

According to a further exemplary embodiment, a collecting vessel which is connected to the fluid outlet and/or to the further fluid outlet is presented. The collecting vessel collects the decontaminated fluid drained off from the reaction vessel, wherein the decontaminated fluid comprises a reaction product that is the result of the reaction of the contaminant and the reactive particles.

In the following, the fluid which is cleaned and recycled is called decontaminated fluid. The decontaminated fluid is the fluid which exits the reaction vessel or the plurality of (further) reaction vessels after one or a plurality of cycles of passing the (further) vessels. The decontaminated fluid comprises a lower concentration of contaminant in comparison to the contaminated fluid. In some cases, all contaminants are removed from the decontaminated fluid.

Hence, by collecting the decontaminated fluid and the inert reaction product, a storage and evacuation of decontaminated fluid is provided. Moreover, the decontaminated fluid contains the above described abrasion particles, because due to the smaller size of the abrasion particles in comparison to the reactive particles, the abrasion particles leave the fluidized bed and are drained off by the flow of the decontaminated fluid. Hence, if a concentration of abrasion particles is still in the decontaminated fluid, an after-reaction of the abrasion particles with the contaminant occurs. This leads to a further reduction of the contaminant in the decontaminated fluid.

Moreover, according to another exemplary embodiment of the present invention, the collecting vessel is formed such that a flocculent is injectable into the collecting vessel for flocculating the reactive product from the decontaminated fluid. The flocculent forms large units of the inert reaction product which is suspended in the decontaminated fluid. Due to the force of gravity, the large units of the inert reaction product settle and may be separated from the decontaminated fluid.

According to a further exemplary embodiment, the system further comprises a separation unit which is connected to the collecting vessel for separating the inert reaction product from the decontaminated fluid. A separation unit may comprise for example a baffle plate thickener.

According to a further exemplary embodiment, the system further comprises a pressing unit connected to the separation unit for water removal and pressing the reactive product into solid packages. The pressing unit may comprise for example a chamber filter press wherein the flocculated inert reaction product may be pressed into solid packages. The solid packages are comfortable to store and to transport.

According to a further exemplary embodiment, the system further comprises a further collecting vessel connected to the separation unit. The further collecting vessel is arranged for receiving the decontaminated fluid from the separation unit. In a further exemplary embodiment, a reducing agent is feedable to the further collecting vessel. For example, the reducing agent may adjust a neutral pH-value (e.g. pH-value 7) such that the decontaminated fluid may be returned to the ground. In this connection the addition of various reducing agents (e.g. iron-II-sulfate, iron-II-chloride or sodium dithionite) or surfactants (e.g. tensides) may improve the influence on remediation of contaminated sites.

According to a further exemplary embodiment, the system further comprises an injection unit which is arranged for injecting the decontaminated fluid to the ground after passing through the reaction vessel. The decontaminated fluid may be cleaned enough after passing through the reaction vessel such that the decontaminated fluid may be returned to the ground. In order to smoothly inject the decontaminated fluid to the ground, the injection unit may distribute the decontaminated fluid over a certain area or cubature of the ground. Moreover, the injection unit may be adapted for injecting the decontaminated fluid to deeper ground layers.

According to a further exemplary embodiment, the system is configured as a portable system (e.g. for in-house lab use) which comprises a transportation unit with a transportation element for transporting the system.

The transportation element may comprise for example rollers for rolling the carrying unit. Moreover, the transportation element may comprise a handhold for simplify the carrying of the portable system (e.g. laboratory version). Moreover, the transportation element may comprise coupling elements for coupling the transportation unit to transportation devices, such as a trolley or a motor vehicle.

Moreover, according to an exemplary embodiment of the present invention, the components of the above-described system, such as the reaction vessel, the fluid supply unit, the recirculation pipe and/or the several units, such as the separation unit and the injection unit, etc., may comprise quick couplings such that each component of the system may be connected fast and in a modular manner. Hence, the system may be adapted due to the need of the place of action. For example, the amount of reaction vessels may be adjusted quickly by coupling the desired amount and type of reaction vessels together by the quick couplings. Each reaction vessel may comprise the same or different reactive particles such that the system is customizable to a desired removed amount and to a desired type of contaminant for removing. Hence, the system is adjustable to the requirements of the place of action of the system.

For example, if a modular system is used, a control unit may be connected to the fluid supply unit for controlling the flow velocity of the contaminated fluid. In particular, the flow velocity for each of the plurality of coupled reaction vessels may be adjusted individually, Hence, a customizable and adapted contaminant removing system is achieved.

According to a further exemplary embodiment of the method, the pH-value of the contaminated fluid inside the reaction vessel may be set to a ph-value of approximately 1 to 6, substantially of 1 to 4 or substantially 1 to 2.

It has to be noted that embodiments of the invention have been described with reference to different subject matters. In particular, some embodiments have been described with reference to apparatus type features whereas other embodiments have been described with reference to method type features. However, a person skilled in the art will gather from the above and the following description that, unless otherwise notified, in addition to any combination of features belonging to one type of subject matter also any combination between features relating to different subject matters, in particular between features of the apparatus type features and features of the method type features is considered as to be disclosed with this application.

BRIEF DESCRIPTION OF THE DRAWINGS

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Fig. 1 illustrates an exemplary embodiment of a system for removing a contaminant in a contaminated fluid according to an exemplary embodiment of the present invention;

Fig. 2 illustrates a schematic view of a parallel connection of a plurality of reaction vessels according to an exemplary embodiment of the present invention;

Fig. 3 illustrates a schematic view of a serial connection of a plurality of reaction vessels according to an exemplary embodiment of the present invention;

Fig. 4 illustrates a schematic view of a contaminant removing system according to an exemplary embodiment of the present invention;

Fig. 5 illustrates a diagram of a process of reduction of Cr(VI) over a certain time period according to an exemplary process of the present invention;

Fig. 6 illustrates a diagram showing a Cr(VI)-reduction per cycle through a reaction vessel according to an exemplary process of the present invention; and

Fig. 7 shows a diagram of a cumulated distribution of respective particle sizes of reactive particles in a reaction vessel according to an exemplary process of the present invention.

DESCRIPTION OF EMBODIMENTS

The illustrations in the drawings are schematically. It is noted that in different figures, similar or identical elements are provided with the same reference signs.

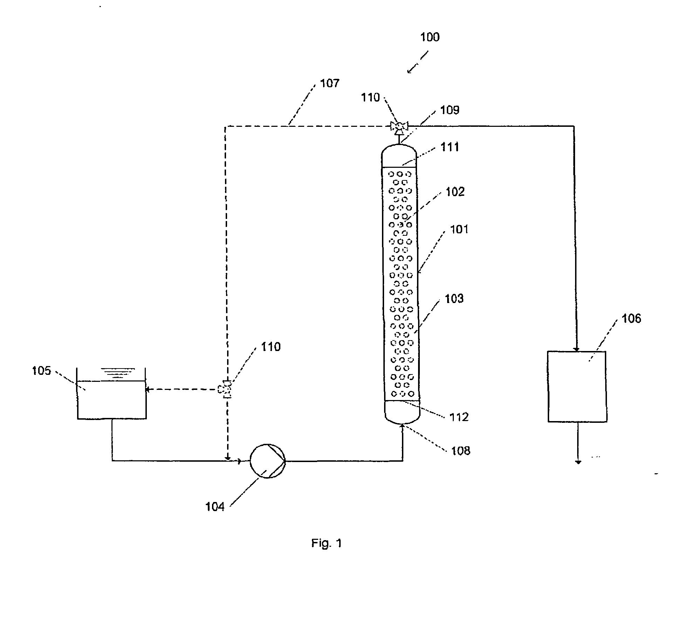

**Fig. 1** shows a system 100 for at least partially removing a contaminant in a contaminated fluid 103. The system 100 comprises a reaction vessel 101 with a fluid inlet 108 and a fluid outlet 109. The fluid inlet 108 and the fluid outlet 109 are arranged in such a way that the contaminated fluid 103 is conductable from the fluid inlet 108 to the fluid outlet 109 in a fluid flow direction which has at least a component orientated antiparallel to the force of gravity. Moreover, the system 100 comprises a fluid supply unit 104 which is connected to the fluid inlet 108 for supplying the contaminated fluid 103 through the fluid inlet 108 inside the reaction vessel 101.

Into the reaction vessel 101 reactive particles 102 which are reactive with the contaminant are filled. The fluid supply unit 104 is adapted for controlling a flow velocity of the contaminated fluid 103 between the fluid inlet 108 and the fluid outlet 109 in such a way that the flow of contaminated fluid 103 through the reactive particles 102 generates a fluidized bed of the reactive particles 102. By flowing of the contaminated fluid 103 through the reactive particles 102 the contaminant in the contaminated fluid is removed due to a reaction of the contaminant and the reactive particles 102 to e.g. a solid, inert reaction product.

The reactive particles 102, such as iron particles, comprise approximately a size of more than 2 mm. Inside the reaction vessel 101 at least approximately 80 % of the reactive particles may have a size of approximately more than 2 mm. The fluid supply unit 104 may comprise for instance a controllable pump that may control the flow velocity of the contaminated fluid 103 to the reaction vessel 101.

Restraint systems 111, 112 may be installed to the reaction vessels 101. As shown in Fig. 1, a lower restraint system 112 extends along the cross-section of the reaction vessel 101. The lower restraint system 112 is formed such that the reactive particles 102 may not pass the low restraint system 112 e.g. in a direction of the force of gravity. Hence, even in an inactive operation mode of the system 100, the reactive particles 102 do not exit the reaction vessel 101 through the fluid inlet 108.

The fluid supply unit 104 controls the flow velocity in such a way that the dimensions and in particular the height of the fluidized bed along a substantial vertical direction inside the reaction vessel 101 may be exactly adjusted. A higher flow velocity of the contaminated fluid 103 leads to a larger dimension of the fluidized bed along a vertical direction inside the reaction vessel 101. Hence, the (vertical) height of the fluidized bed may be adjusted in such a way, that the fluidized particles 102 do not exit the fluid outlet 109. Due to disturbances and vibration, an undesired amount of reactive particles 102 leave the fluidized bed and slop over, so that some reactive particles 102 exit the reaction vessel 101 through the fluid outlet 109. To reduce this risk, an upper restraint system 111 is installed to the reaction vessel 101 for preventing the reactive particles 102 from flowing through the fluid outlet 109.

Inside the fluidized bed, the reactive particles 102 comprise a turbulent movement. This turbulent movement increases the reaction rate of the contaminant in the contaminated fluid 103 and the reactive particles 102. Additionally, due to the turbulent movement of the reactive particles 102, the reactive particles 102 collide with each other such that the surfaces of the reactive particles abrade each other. Hence, the surfaces of the reactive particles 102 purify themselves in a self-acting manner.

In general, the inert reaction products that are abraded from the reactive particles 102 are smaller than the reactive particles 102. Due to the flow velocity of the contaminated fluid, the smaller sized inert reaction product is dragged out from the fluidized bed and exits the reaction vessel 101. Hence, by the control of the flow velocity, the reactive particles 102 are kept within a fluidized bed without flowing out of the reaction vessel 101. At the same time the reaction product is dragged off from the reaction vessel 101 without a need of further filtration units, for example.

Moreover, as shown in Fig. 1, a recirculation pipe 107 may connect the fluid outlet 109 of the reaction vessel 101 with a reservoir 105 filled with the contaminated fluid 103 or at least upstream of the fluid supply unit 104. Hence, a circular flow of the contaminated fluid 103 may be generated, such that the contaminated fluid 103 may flow through the reaction vessel 101 several times. The recirculation pipe 107 may be connected to the reservoir 105 or (upstream of) the fluid supply unit 104. The fluid supply unit 104 is fed by the contaminated fluid 103 from the reservoir 105.

A valve 110 is located downstream (with respect to the flow direction of the contaminated fluid 103) of the fluid outlet 109. The valve 110 may control the flow of the contaminated fluid 103 to the recirculation pipe 107 or to further coupled units, such as to a collecting vessel 106. For example, after the contaminated fluid 103 passes for several cycles the reaction vessel 101, the valve 110 switches and conducts the contaminated fluid 103 to the collecting vessel 106. Hence, the contaminated fluid 103 may flow through the reaction vessel 101 as long as the contaminant is removed sufficiently, so that the contaminated fluid 103 is fed to the collecting vessel 106.

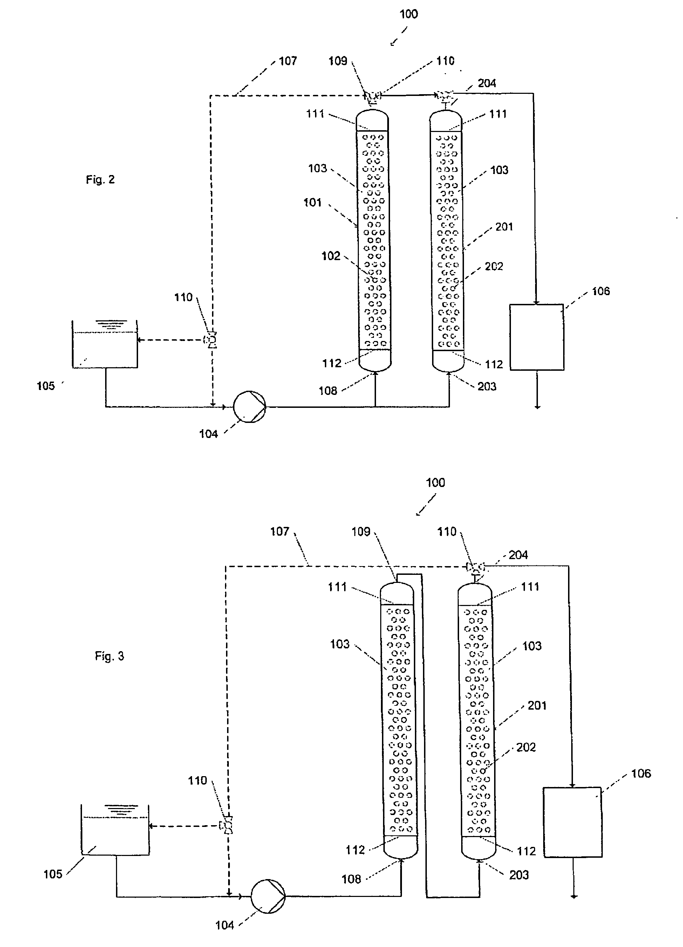

Fig. 2 shows the exemplary layout of the system 100 as shown in Fig. 1, whereas a further reaction vessel 201 is connected to the reaction vessel 101 in parallel. Each of the reaction vessels 101, 201 may be fed with contaminated fluid 103 from the reservoir 105. The fluid supply unit 104 may control the flow velocity of the contaminated fluid 103 in each reaction vessel 101, 201 individually. The fluid velocity of the contaminated fluid 103 is the same in each reaction vessel 101, 201. On the other hand, the pipe connections downstream of the fluid supply unit 104 may be adapted by additional valves and fittings for controlling the contaminated fluid 103 in each reaction vessel 101, 201 in such a way, that in each reaction vessel 101, 201 an individual and separate flow velocity of the contaminated fluid 103 is generated.

The further reaction vessel 201 comprises further reactive particles 202 which may be the same or which may differ to the reactive particles 102 of the reaction vessel 101. Downstream of each reaction vessel 101, 201, a respective valve 110 may be attached, so that the flow of the contaminated fluid 103 through the fluid outlet 109 and through a further fluid outlet 204 is controlled. In particular, the recirculation pipe 107 may guide the contaminated fluid 103 that is drained off from the reaction vessel 101 and/or from the further reaction vessel 201 to the reservoir 105 or (upstream of) the fluid supply unit 104.

**Fig. 3** shows the system 100 of Fig. 1 and Fig. 2, whereas the reaction vessel 101 and the further reaction vessel 201 are connected in series. Hence, the contaminated fluid 103 first flows through the reaction vessel 101 and subsequent through the further reaction vessel 201. In order to conduct the contaminated fluid 103, a valve 110 may be installed downstream of the further reaction vessel 201 such that the flow of the contaminated fluid 103 may be controlled individually (e.g. to the recirculation pipe 107 or to the collecting vessel 106).

The exemplary embodiments of Fig. 2 and Fig. 3 may be connected in one system 100 such that the system 100 comprises a plurality of reaction vessels 101, 201 connected in series and/or a plurality of reaction vessels 101, 201 connected in parallel.

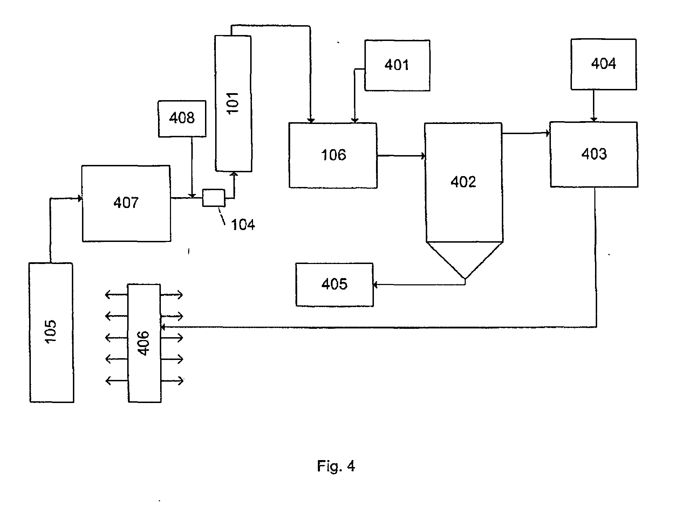

**Fig. 4** illustrates an exemplary embodiment of the system 100. In the system 100 shown in Fig. 4 only the reaction vessel 101 is shown, whereas as well the arrangement of the further reaction vessels 201 shown in Fig. 2 and Fig. 3 may be applied to the system 100 shown in Fig. 4.

In Fig. 4, the reservoir 105 is a sump that is carved into a ground or a soil for collecting ground water which is an example for a contaminated fluid 103. The contaminated fluid 103 is conducted to a buffer tank 407 in which large particles, such as sediments, can be separated (e.g. settled) before entering a reaction vessel 101. Moreover, before entering the reaction vessel 101, an acid injection unit 408 is arranged. Hence, the acid injection unit 408 controls the pH-value of the contaminated fluid 103. It may be beneficial to have a pH-value of lower than 7, e.g. a pH-value of 4,2 to 4,5. Hence, by a redox reaction between the reactive particles 102 and the contaminated fluid 103 more hydrogen is produced when the contaminated fluid 103 is acidiferous. The hydrogen generated in the reaction of the contaminated fluid 103 with the reactive particles 102 is nascent hydrogen which is highly reactive such that the reaction between the contaminant and the reactive particles to the inert reaction products is more efficient and faster. In other words, the nascent hydrogen accelerates the reaction of the contaminant with the reactive particles 102 (i.e. nascent hydrogen accelerates the reaction more than for example an external addition of molecular hydrogen).

Downstream of the reservoir 105 the fluid supply unit 104 is coupled in order to control the flow velocity of the contaminated fluid 103 inside the reaction vessel 101. After passing the reaction vessel 101, the contaminants are reduced from or removed from the contaminated fluid 103, such that the contaminated fluid is a decontaminated fluid after passing the (further) reaction vessel(s) 101, 201. The decontaminated fluid may be fed to the collecting vessel 106. To the collecting vessel 106 a flocculent unit 401 is attachable, wherein the flocculent unit is adapted for injecting a flocculent to the decontaminated fluid and the reaction product drained off from the reaction vessel 101. The flocculent forms large units of the reaction product which may be still in a suspension. A separation unit 402 is coupled to the collecting vessel 106 wherein the solid reaction product is separated from the decontaminated fluid. The inert reaction product may be fed to a pressing unit 405 which forms solid packages of inert reaction product.

The remained decontaminated fluid may be fed to a further collecting vessel 403. In the further collecting vessel 403, the decontaminated fluid is recycled and prepared in such a manner, that the decontaminated fluid may be drained into the environment, such as the soil. For example, a reducing agent or surfactant may be added by the reducing agent unit 404 to the further collecting vessel 403 in order to prepare a reducing solution out of the decontaminated fluid.

The decontaminated fluid may be conducted to an injection unit 406 which injects the decontaminated fluid into the soil.

In the following, an exemplary process of the present invention is described. In the exemplary process, as described below, the contaminant is hexavalent chrome which is reduced by reactive particles 102 made of zero-valent iron. The inert reaction product is trivalent chromium. The chemical redox reaction is as follows:

$$Fe + CrO_4^{-2} + 8H^+ \rightarrow Fe^{+3} + Cr^{+3} + 4H_2O$$
$$3Fe + 2CrO_4^{-2} + 16H^+ \rightarrow 3Fe^{+2} + 2Cr^{+3} + 8H_2O$$
$$3Fe^{+2} + CrO_4^{-2} + 8H^+ \rightarrow 3Fe^{+3} + Cr^{+3} + 4H_2O$$
$$Fe + 2H^+ \rightarrow Fe^{+2} + H_2$$
$$3H_2 + 2CrO_4^{-2} + 10H^+ \rightarrow 2\,Cr^{+3} + 8H_2O$$

In the exemplary process 5200 g iron particles as reactive particles 102 have been used.

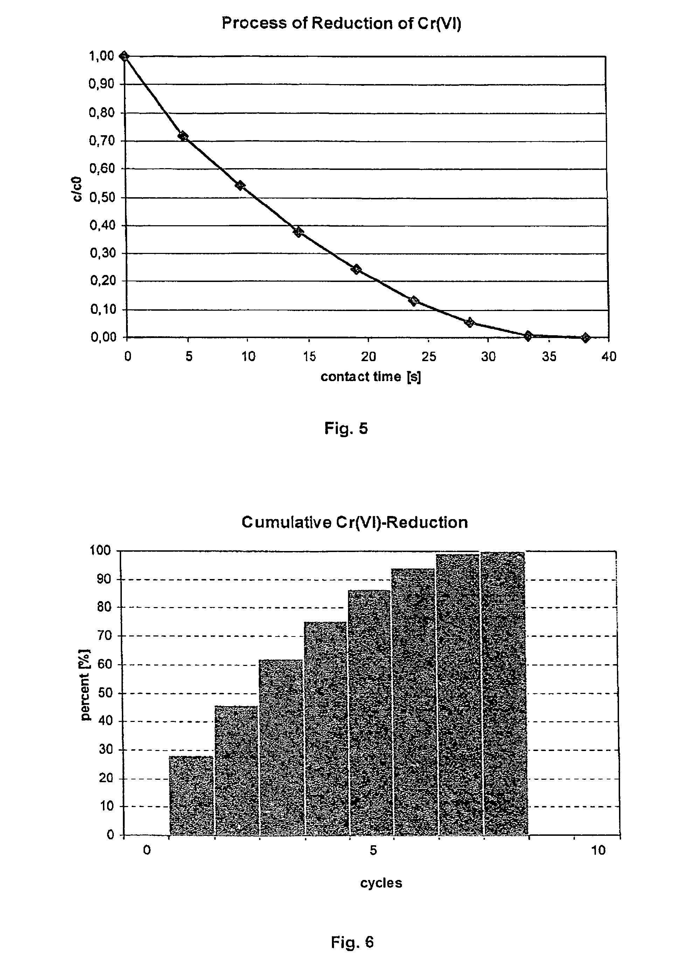

**Fig. 5** shows the contact time of the contaminated fluid 103 in the reaction zone, i.e. in the fluidized bed of the reactive particles 102. The term c denotes the measured concentration of Cr(VI) and c0 denotes the initial concentration of Cr(VI). In the exemplary process, the throughput rate was 0,26 L/s (litres per second), wherein in total 180 L (litres) of contaminated fluid was recycled.

As can be taken from **Fig. 6**, after the contaminated fluid passes seven cycles through the fluidized bed of iron particles, approximately 100 % of hexavalent chrome was removed and reacted to trivalent chromium as reaction product.

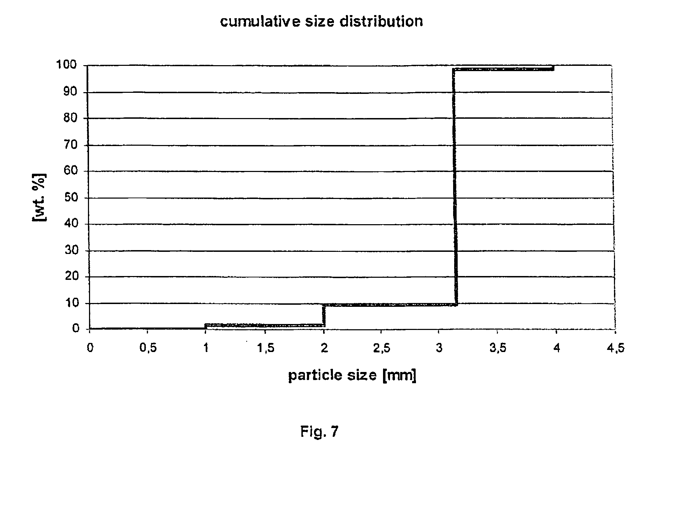

**Fig. 7** shows accumulative distribution of the used size of reactive particles 102 in the exemplary process. As shown in Fig. 7, the chrome reduction was achieved by reactive particles 102 made of iron, wherein the reactive particles 102 had a size mainly between 3 mm and 4 mm.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

List of reference signs:

| | |
|---|---|
| 100 | system |
| 101 | reaction vessel |
| 102 | reactive particle |
| 103 | contaminated fluid |
| 104 | fluid supply unit |
| 105 | reservoir |
| 106 | collecting vessel |
| 107 | recirculation pipe |
| 108 | fluid inlet |
| 109 | fluid outlet |
| 110 | valve |
| 111 | upper restraint system |
| 112 | lower restraint system |
| | |
| 201 | further reaction vessel |
| 202 | further reactive particles |
| 203 | further fluid inlet |
| 204 | further fluid outlet |
| | |
| 401 | flocculent unit |
| 402 | separation unit |
| 403 | further collecting vessel |
| 404 | reducing agent unit |
| 405 | pressing unit |
| 406 | injection unit |
| 407 | buffer tank |
| 408 | acid injection unit |

**Claims**

1. Method for continuously at least partially removing a contaminant in a contaminated fluid (103), the method comprising conducting the contaminated fluid (103) through a fluid inlet (108) of a reaction vessel (101) into the reaction vessel (101), wherein the contaminated fluid (103) flows from the fluid inlet (108) to a fluid outlet (109) of the reaction vessel (101) in a fluid flow direction which has at least a component orientated antiparallel to the force of gravity, and wherein reactive particles (102) which are selected in order to react with a predefined contaminant in the contaminated fluid (103) are filled inside the reaction vessel (101), wherein at least 80 % of the reactive particles (102) have a size between 2 mm and 6 mm,
controlling a flow velocity of the contaminated fluid (103) between the fluid inlet (108) and the fluid outlet (109) so that the flow of contaminated fluid (103) through the reactive particles (102) generates a fluidized bed of the reactive particles (102), thereby removing at least partially the contaminant in the contaminated fluid (103) by a reaction of the contaminant and the reactive particles (102);
wherein, by a turbulent movement of the reactive particles (102) with respect to each other, mechanical abrasion of the surface of the reactive particles (102) occurs, so that surfaces of the reactive particles (102) are cleaned from sticking reaction product parts, such that the surface of the reactive particles (102) is exposed again, and wherein abrasion particles leave the fluidized bed and are drained off by flow of decontaminated fluid.

**2.** Method of claim 1,
setting a pH-value of the contaminated fluid (103) inside the reaction vessel (101) to a pH-value lower than 7.

**Patentansprüche**

**1.** Verfahren zum kontinuierlichen zumindest teilweisen Entfernen einer Verunreinigung in einem kontaminiertem Fluid (103), das Verfahren aufweisend
Leiten des kontaminierten Fluides (103) durch einen Fluideinlass (108) eines Reaktionsgefäßes (101) in das Reaktionsgefäß (101),
wobei das kontaminierte Fluid (103) von dem Fluideinlass (108) zu einem Fluidauslass (109) des Reaktionsgefäßes (101) in eine FluidFlussrichtung fließt, welche zumindest eine Komponente hat, welche antiparallel zu der Schwerkraft orientiert ist, und
wobei reaktive Partikel (102), welche ausgewählt sind, um mit einer vordefinierten Verunreinigung des kontaminierten Fluides (103) zu reagieren, in das Reaktionsgefäß (101) gefüllt sind, wobei zumindest 80 % der reaktiven Partikel (102) eine Größe zwischen 2 mm und 6 mm haben,
Steuern einer Fließgeschwindigkeit des kontaminierten Fluides (103) zwischen dem Fluideinlass (108) und dem Fluidauslass (109), so dass der Fluss des kontaminierten Fluides (103) durch die reaktiven Partikel (102) ein verflüssigtes Bett der reaktiven Partikel (102) generiert, um dadurch zumindest teilweise die Verunreinigung in dem kontaminierten Fluid (103) mittels einer Reaktion der Verunreinigung und der reaktiven Partikel (102) zu entfernen; wobei mittels einer turbulenten Bewegung der reaktiven Partikel (102) in Bezug auf einander, mechanische Abrasion der Oberfläche der reaktiven Partikel (102) auftritt, so dass Oberflächen der reaktiven Partikel (102) gereinigt werden von anhaftenden Reaktionsprodukt Teilen, so dass die Oberfläche der reaktiven Partikel (102) wieder freigelegt wird, und wobei Abrasionspartikel das verflüssigte Bett verlassen und mittels des Flusses des dekontaminierten Fluides abfließen.

**2.** Verfahren gemäß Anspruch 1,
Einstellen eines pH-Wertes des kontaminierten Fluides (103) innerhalb des Reaktionsgefäßes (101) auf einen pH-Wert niedriger als 7.

**Revendications**

**1.** Procédé d'élimination en continu au moins partiellement d'un contaminant dans un fluide contaminé (103), le procédé comprenant
le transport du fluide contaminé (103) à travers une entrée de fluide (108) d'un réacteur (101) dans le réacteur (101), dans lequel le fluide contaminé (103) s'écoule depuis l'entrée de fluide (108) vers une sortie de fluide (109) du réacteur (101) dans un sens d'écoulement du fluide qui a au moins un composant orienté de façon antiparallèle à la pesanteur, et
dans lequel des particules réactives (102) qui sont choisies afin de réagir avec un contaminant prédéfini dans le fluide contaminé (103) sont chargées à l'intérieur du réacteur (101), dans lequel au moins 80 % des particules réactives (102) ont une taille comprise entre 2 mm et 6 mm,
le contrôle de la vitesse d'écoulement du fluide contaminé (103) entre l'entrée de fluide (108) et la sortie de fluide (109) de sorte que l'écoulement du fluide contaminé (103) à travers les particules réactives (102) génère un lit fluidisé des particules réactives (102), afin d'éliminer au moins partiellement le contaminant dans le fluide contaminé (103) par réaction du contaminant et des particules réactives (102) ;
dans lequel, par un mouvement turbulent des particules réactives (102) les unes par rapport aux autres, une abrasion mécanique de la surface des particules réactives (102) se produit, de sorte que les surfaces des particules réactives (102) soient nettoyées des parties de produit réactionnel collantes, de sorte que la surface des particules réactives (102) soit de nouveau exposée, et dans lequel des particules d'abrasion quittent le lit fluidisé et sont éliminées par écoulement du fluide décontaminé.

**2.** Procédé selon la revendication 1, comprenant le réglage d'une valeur de pH du fluide contaminé (103) à l'intérieur du réacteur (101) à une valeur de pH inférieure à 7.

Fig. 1

Fig. 2

Fig. 3

13

Fig. 4

## Process of Reduction of Cr(VI)

Fig. 5

## Cumulative Cr(VI)-Reduction

Fig. 6

cumulative size distribution

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20050133458 A1
- EP 0499928 A1
- US 5380441 A
- US 4108770 A

### Non-patent literature cited in the description

- Chromate reduction by waste iron from electroplating wastewater using plug flow reactor. **CHEN et al.** Journal of Hazardous Materials. Elsevier, vol. 152, 1092-1097
- VDI Heat Atlas. Lcb4